# EUROPEAN PATENT APPLICATION

(11) **EP 1 327 614 A1**
(43) Date of publication of application: **16.07.2003**
(21) Application number: 02026613.6
(22) Date of filing: 29.11.2002
(51) Int. Cl.: C03C 25/18, B05C 3/12, B05C 11/02

(54) **Device/method to improve coating diameter and uniformity with adjustable sizing die**

(30) Priority: 10.12.2001 US 8478
(71) Applicant: ALCATEL, 75008 Paris (FR)
(72) Inventor: Yuan, Michael, Hunterville, NC 28078 (US)
(74) Representative: Dreiss, Fuhlendorf, Steimle & Becker

(57) **Abstract**

A method and apparatus for adjusting the coating diameter and/or thickness during production of an elongated member being coated. In the preferred embodiment, the elongated member is an optical fiber. The apparatus includes a coating unit having a sizing die with an orifice through which the elongated member is conveyed, the diameter the orifice being adjustable. This is achieved by providing a helical spring in the sizing die with the inside of the spring defining the orifice. A tensioning mechanism adjusts the tension of the spring by causing relative rotation between opposite ends of the spring to change the diameter of the orifice. The apparatus further includes a measuring device, disposed downstream of the coating unit, for measuring the diameter of the coating; and a controller for adjusting the diameter of the orifice in response to the measured diameter of the coating.

## Description

### Field of the Invention

The present invention relates to method and apparatus for adjusting the diameter of a coating die to allow for the coating diameter and thickness to be regulated and adjusted.

### Background

Optical fibers are very small diameter glass strands which are capable of transmitting an optical signal over great distances, at high speeds, and with extremely low signal loss as compared to standard wire or cable networks. Optical fiber has found increasingly widespread application and currently constitutes the backbone of the worldwide telecommunication network. Because of this development, there has been a growing need for better quality optical fibers with a decrease in production time and costs, while ensuring adequate material strength for continued operation in increasingly harsh conditions.

In general, optical fibers are manufactured from relatively large diameter glass preforms. Fiber optic preforms are generally made with concentric glass layers including a core and a cladding. The difference in refraction indices between the core and cladding allows the optical signals in the core to be continuously reflected back into the core as they travel along the fiber. The combination of the core and cladding layers is often referred to as the "primary preform." The optical fiber is then formed by heating and softening a portion of the preform, and rapidly drawing the softened portion with specialized equipment. Optical fibers intended for manufacture of telecommunications cables are typically coated with one or more polymer layers, with two layer coating being preferred. The first, or primary, coating is applied directly to the surface of the fiber, and the second, or secondary, coating is applied over the primary coating.

These coatings are applied using coating units that are located below the draw tower. The coating units include a sizing die that has a predetermined diameter. When applying the coating, it is important to produce coated fibers with a consistent coated diameter and coating which are concentric to the fiber.

U.S. Patent No. 5,366,527 discloses a method of adjusting the coating thickness by regulating and changing the viscosity profile of the coating material while it is in the die. This is achieved by changing the temperature of the coating material and/or the temperature of the die itself.

### SUMMARY OF THE INVENTION

The invention is directed to a method and apparatus for adjusting the coating diameter and/or thickness during production of an elongated member being coated. In the preferred embodiment, the elongated member is an optical fiber. However, the elongated member could include, e.g., a conductive wire.

The apparatus includes a coating unit having a sizing die with an orifice through which the elongated member is conveyed, the diameter the orifice being adjustable. This is achieved by providing a helical spring in the sizing die with the inside of the spring defining the orifice. A tensioning mechanism adjusts the tension of the spring by causing relative rotation between opposite ends of the spring to change the diameter of the orifice. According to the preferred embodiment, the sizing die includes first and second portions respectively having first and second through-holes in which the spring is disposed. One end of the spring is attached to the first portion and an opposite end of the spring is attached to the second portion and the first and second portions are rotatatable with respect to each other so as to act as the tensioning mechanism.

The apparatus further includes a measuring device, disposed downstream of the coating unit, for measuring the diameter of the coating; and a controller for adjusting the diameter of the orifice in response to the measured diameter of the coating. More specifically, in the preferred embodiment, the controller controls the relative rotation between the first and second portions. When the tension in the spring is increased, the diameter of the orifice is reduced. When the tension in the spring is decreased, the diameter of the orifice in increased.

### BRIEF DESCRIPTION OF THE DRAWINGS

Fig. 1 is a perspective view of a preferred embodiment of the invention;
Fig. 2 is a cross-sectional view of the sizing die according to the present invention; and
Fig. 3 is a schematic illustration of the coating system according to the present invention.

### DETAILED DESCRIPTION OF THE INVENTION

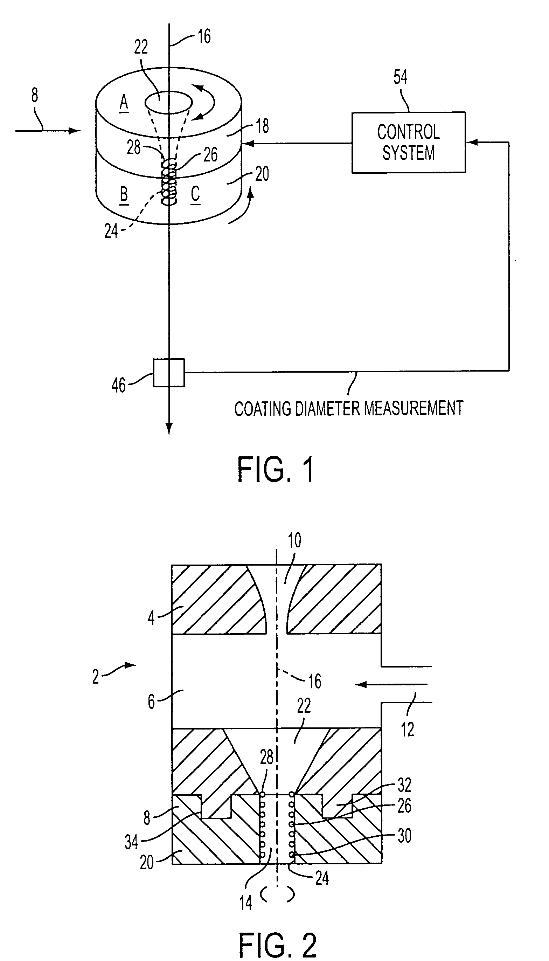

A preferred embodiment of the invention will be described in reference to Figs. 1 and 2. The coating unit 2 of the present invention includes a guide die 4, a coating insert portion 6 and a sizing die 8. Fig. 1 shows the sizing die only.

The guide die has a conical opening 10 for initially guiding the elongated member 16 to be coated into the coating unit 2. The coating material is extruded through entrance 12 of the insert portion 6 to coat the elongated member 16. The sizing die 8 has an adjustable orifice 14 through which the elongated member 16 is conveyed to control the diameter of the coated member.

As note above, the elongated member 16 is preferably an optical fiber. However, the invention is not limited in this respect. For example, the elongated member could be a conductive wire, or the like. As discussed below, the invention is directed to the design of the sizing die 8. Hence, the invention is not limited to any particular type of guide die 4 or insert portion 6.

The sizing die 8 includes a top portion 18 and a bottom portion 20. The top and bottom portions have top and bottom bores 22 and 24, respectively. The top bore 22 is preferably conical. Although the walls are shown as being planar, they could naturally be curved.

A helical spring 26 is positioned in the bottom bore 24. The spring 26 has a first end 28 at the top of the spring and a second end 30 at the bottom of the spring. The second end 30 of the spring is fixedly attached to the bottom portion 20 of the sizing die, while the first end 28 of the spring is fixed to the top portion 18 of the sizing die. The center opening in the spring 26 defines the orifice 14 of the sizing die.

The top and bottom portions 18, 20 are rotatably disposed with respect to one another, as indicated by the arrow in Fig. 1. More specifically, according to a preferred embodiment, the top portion 18 includes an annular rib 32 that is received in an annular recess 34 provided in the bottom portion 20 to allow for relative rotation. When the top and bottom portions are moved to cause relative rotation in a first direction, the spring is rotated in such a manner as to increase its tension. This causes the number of turns to decrease and, attendantly, the diameter of the orifice 14 to decrease. On the other hand, upon relative rotation in the opposite direction, the spring is rotated to decrease its tension such that the number of turns increases. As a result, the diameter of the orifice increases. Naturally, the diameter of the bottom bore must be large enough to allow the spring to rotate to assume a predetermined maximum diameter of the orifice.

Any number of known driving arrangements could be used to cause the relative rotation between the top and bottom portions 18 and 20, including either a direct drive arrangement or an indirect drive using gears. For example, a stepper motor could be secured to the outside of either the top or bottom portion 18 and 20 and include a worm gear that drives a gear extending at least partially around the circumference of the other portion. The invention is not limited to any particular driving arrangement.

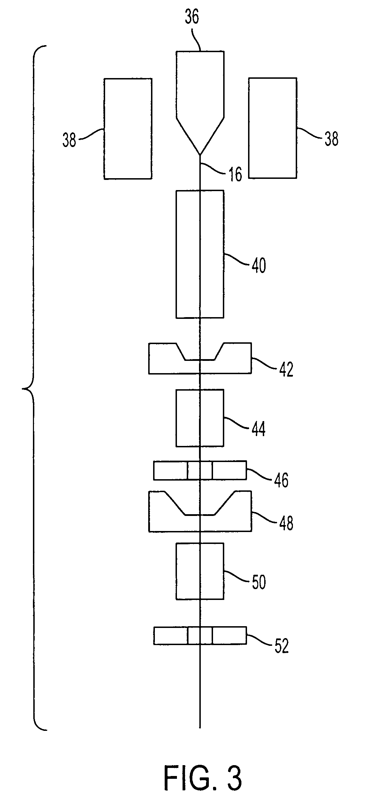

Fig. 3 illustrates a coating system, according to one aspect of the present invention. As noted above, although the invention can be used to apply coatings to conductive wires, or the like, according to the preferred embodiment, the coating is applied to an optical fiber 16.

The optical fiber is drawn from a preform 36 which is heated in a furnace 38. The fiber 16 is then passed through a cooling device 40, primary coating unit 42, primary coating curing device 44 and diameter measuring device 46. Thereafter, the fiber, with the primary coating applied thereto, is passed through a secondary coating unit 48, secondary coating curing device 50 and another diameter measuring device 52. The primary 42 and secondary 48 coating units correspond to the coating unit 2 described above.

The curing devices 44 and 50 and the diameter measuring devices 46 and 52 are conventional so the details of these devices will not be discussed in detail. The curing device has a UV light source for curing the respective coatings. The diameter measuring devices can measure the thickness of the coating or the total diameter of the fiber 16.

The invention can naturally be used to apply the primary and secondary coatings. For the sake of simplicity, the invention will be described in relation to applying the primary coating. Referring again to Fig. 1, a control unit 54, such as a computer, is electrically coupled with the sizing die 8 associated with the primary coating unit 42 (2) and the diameter measuring device 46. The detected diameter is communicated from the diameter measuring device 46 to the control unit 54 where a determination is made as to whether the actual, measured, diameter coincides with a target value or range of values. If the measured diameter is smaller than the target value, the top 18 and bottom 20 portions of the sizing die 12 are rotated relative to one another to decrease the tension on the spring and enlarge the orifice 14 so that the diameter of the coated fiber is increased. Conversely, if the measured diameter is larger than the target value, the top and bottom portions 18 and 20 are rotated relative to each other in the opposite direction to increase the tension on the spring 26 and decrease the diameter of the orifice 14 resulting in a coated fiber having a reduced diameter.

Thus, according to the invention, the diameter of the coated fiber or the thickness of the coating, can be easily controlled electronically by changing the diameter of the orifice 14 associated with the sizing die.

It is contemplated that numerous modifications may be made to the present invention without departing from the spirit and scope of the invention as defined in the following claims.

## Claims

1. An apparatus for applying a coating to an elongated member, comprising:
a coating unit having a sizing die with an orifice through which said elongated member is conveyed, the diameter said orifice being adjustable.

2. The apparatus of claim 1, wherein sizing die includes a helical spring that defines said orifice.

3. The apparatus of claim 2, further comprising a tensioning mechanism for adjusting the tension of said spring by causing relative rotation between opposite ends of said spring to change the diameter of said orifice.

4. The apparatus of claim 3, wherein said sizing die includes first and second portions respectively having first and second through-holes in which said spring is disposed, wherein one end of said spring is attached to said first portion and an opposite end of said spring is attached to said second portion, said first and second portions be rotatatable with respect to each other and corresponding to said tensioning mechanism.

5. The apparatus of claim 1, wherein said elongated member is an optical fiber.

6. The apparatus of claim 1, wherein said elongate member is a conductive member.

7. The apparatus of claim 1, further comprising:
a measuring device, disposed downstream of said coating unit, for measuring the diameter of said coating; and
a controller for adjusting the diameter of the orifice in response to the measured diameter of said coating.

8. The apparatus of claim 4, further comprising:
a measuring device, disposed downstream of said coating unit, for measuring the diameter of said coating; and
a controller for controlling relative rotation between said first and second portions in response to the measured diameter of said coating.

9. The apparatus of claim 7, wherein said elongated member is an optical fiber.

10. The apparatus of claim 8, wherein said elongated member is an optical fiber.

11. The apparatus of claim 4, wherein said first portion is disposed upstream of said second portion and wherein said first through hole has a conical shape.

12. A method of applying a coating to an elongated member, comprising the following steps:
passing the elongated member through a coating unit having a sizing die with an adjustable orifice for controlling an amount of coating applied to the elongated member;
measuring a diameter of the coated elongated member;
determining whether the measured diameter is within a target range;
adjusting a diameter of said orifice when it is determined that the measured diameter is outside the target range.

13. The method of claim 12, wherein said passing step includes the step of passing an optical fiber through said coating unit, said optical fiber corresponding to said elongated member.

14. The method of claim 13, wherein said orifice is defined by a helical spring provided in said sizing die.

15. The method of claim 14, wherein said adjusting step includes the step of adjusting the tension of said spring.

16. The method of claim 15, wherein said adjusting step includes the step of rotating one end of said spring relative to an opposite end of said spring.

17. A method of applying a coating to an elongated member, comprising the following steps:
passing the elongated member through a coating unit having a sizing die with an adjustable orifice for controlling an amount of coating applied to the elongated member;
measuring a thickness of the coating applied to the elongated member;
determining whether the measured thickness is within a target range;
adjusting a diameter of said orifice when it is determined that the measured thickness is outside the target range.

18. The method of claim 17, wherein said passing step includes the step of passing an optical fiber through said coating unit, said optical fiber corresponding to said elongated member.

19. The method of claim 18, wherein said orifice is defined by a helical spring provided in said sizing die.

20. The method of claim 20, wherein said adjusting step includes the step of adjusting the tension of said spring.

21. The method of claim 20, wherein said adjusting step includes the step of rotating one end of said spring relative to an opposite end of said spring.
